**Europäisches Patentamt**

**European Patent Office**

**Office européen des brevets**

(11) Numéro de publication: **0 042 790**
**B1**

(12) **FASCICULE DE BREVET EUROPEEN**

(45) Date de publication du fascicule du brevet:
18.04.84

(21) Numéro de dépôt: **81400968.4**

(22) Date de dépôt: **17.06.81**

(51) Int. Cl.³: **G 01 L 17/00,** B 60 C 23/04

(54) **Dispositif pour mesurer la pression de pneumatiques notamment pour aéronefs.**

(30) Priorité: **19.06.80 FR 8013579**

(43) Date de publication de la demande:
**30.12.81 Bulletin 81/52**

(45) Mention de la délivrance du brevet:
**18.04.84 Bulletin 84/16**

(84) Etats contractants désignés:
**AT BE CH DE FR GB IT LI LU NL SE**

(56) Documents cités:
**BE - A - 487 825**
**FR - A - 1 411 017**
**FR - A - 2 266 879**
**LU - A - 80 857**
**US - A - 2 848 710**
**US - A - 3 249 916**

(73) Titulaire: **SOCIETE ANONYME DE TELECOMMUNICATIONS, 40 avenue de New York, F-75116 Paris (FR)**

(72) Inventeur: **Lefaucheux, Jean-Louis, Joseph Robert, 9 rue Sainte-Lucie, F-75015 Paris (FR)**
Inventeur: **Martin, Claude, 29 rue des Ebisoires, F-78370 Plaisir (FR)**
Inventeur: **Mokrani, Edmond Eugène Albert, 3 Allée des Tilleuls, F-92330 Sceaux (FR)**

(74) Mandataire: **Bloch, Robert et al, 39 avenue de Friedland, F-75008 Paris (FR)**

ACTORUM AG

Dispositif pour mesurer la pression de pneumatiques notamment pour aéronefs

La présente invention concerne un dispositif permettant de mesurer la pression de l'air dans les pneumatiques des roues d'un aéronef et de visualiser la mesure dans le poste de pilotage.

Les pneumatiques d'avion peuvent perdre quotidiennement environ 5% de leur pression, par suite de porosité ou d'autres facteurs. Il est donc recommandé de vérifier la pression de tous les pneumatiques d'un avion. De plus, le coefficient de charge des avions commerciaux est fréquemment élevé, si bien que la masse supportée par chaque pneumatique est souvent voisine de la limite maximale permise. Dans ces conditions, un pneumatique dégonflé impose une charge additionnelle à son homologue disposé sur le même axe, ce qui peut provoquer la défaillance de celui-ci.

Des systèmes de mesure de la pression de roues d'avions sont déjà connus. L'information de pression est généralement fournie par un capteur de pression disposé à l'emplacement de la valve de gonflage sur la jante de la roue. Ce capteur de pression peut être constitué par des jauges résistives ou piézo-résistives montées en pont de Wheatstone et délivrant un signal électrique fonction de la pression mesurée, à la condition qu'une tension d'excitation soit fournie au pont. Ce signal électrique est habituellement amplifié et traité par des circuits électriques logés dans la roue de l'avion et transmis jusque dans le cockpit où la grandeur électrique est analysée, puis traitée au moyen d'un sous-ensemble calculateur.

Ce calculateur peut généralement recevoir les signaux électriques provenant de toutes les roues d'avion et transmettre à un indicateur tel qu'un tube cathodique ou appareil de mesure les valeurs des pressions absolues ou différentielles mesurées. De tels systèmes nécessitent l'insertion d'éléments électroniques actifs extrêmement fragiles tels que des transistors, des redresseurs (etc.) à l'intérieur de chaque roue d'avion, ces éléments y étant soumis aux variations de température s'étageant de −40 à +150°C. De tels systèmes nécessitent également l'insertion d'un circuit d'excitation, entraînant une multiplication des liaisons électriques entre le cockpit et la roue de l'avion. Ces systèmes sont également soumis à des efforts mécaniques importants tels que des chocs, des accélérations intenses au décollage et à l'atterrissage. De tels systèmes permettent en général une lecture de la pression dans le poste de pilotage pour permettre un contrôle de la pression à tout instant, préalablement à l'atterrissage par exemple, ce qui nécessite de nouvelles liaisons électriques jusqu'au cockpit.

La présente invention, qui vise donc à contrôler la pression des pneux à distance, par indication visuelle dans le poste de pilotage, et ce à tout instant, aussi bien à l'arrêt qu'en cours de roulement au sol, une perte de pression n'étant pas exclue à ce moment-là, a pour objet de pallier les insuffisances des systèmes de mesure connus.

La présente invention est basée sur le fait qu'il est également connu, notamment par les brevets FR-A Nos 2266879 et 1411017, d'utiliser un capteur de pression capacitif destiné à faire osciller un transistor à une fréquence fonction de la valeur de la capacité du capteur, et de transformer le signal du transistor-oscillateur en une tension représentative de l'information de pression recherchée.

A partir d'un tel dispositif — avec lequel il n'est déjà pas nécessaire de disposer, au niveau de la roue, d'un circuit d'excitation séparé —, l'information de pression étant saisie par des moyens passifs, la présente invention vise à ce que seuls les organes de détection robustes soient disposés à l'extérieur de la cellule de l'aéronef et soient soumis au rude environnement climatique (température, hygrométrie, etc.) et mécanique (chocs, accélérations, etc.) existant au niveau d'une roue d'aéronef, lors de l'atterrissage ou du décollage.

La présente invention est également basée sur le fait qu'il est également connu par le brevet LU-A No 80857 d'utiliser un capteur dont l'information électrique est appliquée aux bornes du primaire d'un transformateur, ledit primaire étant mécaniquement solidaire de la roue, le secondaire dudit transformateur étant mécaniquement solidaire de la partie fixe, le rapport n de transformation entre le primaire et le secondaire modifiant l'information électrique du capteur selon le carré dudit rapport n.

La présente invention vise également à éliminer tous les contacts frottants de l'art antérieur tels que des balais frottants sur des pistes conductrices dont la fiabilité est relativement faible, eu égard à l'environnement, et soumises à une usure ou à un encrassement sévère.

La présente invention vise aussi à s'affranchir de l'influence de la température dans la lecture de la mesure de pression.

A cet effet, la présente invention concerne un dispositif pour mesurer la pression des pneumatiques, notamment pour aéronefs, comprenant un capteur passif agencé pour transformer linéairement une variation de pression en une variation d'information électrique, *in situ*, des premiers moyens agencés pour acheminer l'information électrique du capteur dans la cabine dudit aéronef, un auto-oscillateur dont la fréquence d'oscillation est contrôlée par la valeur de ladite information électrique du capteur, et des seconds moyens agencés pour transformer le signal issu dudit auto-oscillateur en une tension continue proportionnelle à un écart de fréquence, ledit écart de fréquence étant proportionnel à ladite variation de pression, l'information électrique du capteur, avant transmission dans la cabine, étant appliquée aux bornes du primaire d'un transformateur haute fréquence faisant partie desdits premiers moyens, ledit primaire étant mécaniquement solidaire de la roue, le secondaire dudit transformateur étant mécaniquement solidaire d'une partie fixe de l'aéronef, et le rapport n de transformation entre le primaire et le secondaire modifiant l'information électrique du capteur selon le carré dudit rapport n, dispositif caractérisé par le fait que le primaire du transformateur est concentrique à la roue, et que le secondaire du transformateur est solidaire du train d'atterrissage et concentrique au primaire.

En outre, on peut comparer deux à deux les pressions absolues obtenues pour chaque roue, des premiers moyens permettant de fournir un signal lorsque la pression absolue de la première roue est inférieure à celle de la seconde.

Le signal issu dudit auto-oscillateur peut avantageusement servir d'oscillateur de référence, pour un second oscillateur asservi en phase et en fréquence, ledit second oscillateur étant commandé en tension par le signal issu d'un comparateur de phase, ledit comparateur de phase étant excité par les signaux issus desdits premier et second oscillateurs.

Le transformateur haute fréquence de l'invention peut comporter, de préférence, deux enroulements concentriques, l'un étant fixe, l'autre en rotation autour de l'axe du premier, lesdits enroulements étant maintenus au moyen de carcasses quasi cylindriques en matériau amagnétique, la carcasse mobile étant maintenue en contact contre la carcasse fixe par des moyens de roulement, lesdites carcasses présentant une très faible inertie, des fils électriques raccordés aux bornes desdits enroulements transmettant un signal présentant un rapport n de transformation représentatif du rapport n desdits enroulements.

D'autres avantages et caractéristiques apparaîtront à la lecture de la description suivante illustrée par des dessins:

la fig. 1 est un schéma-diagramme du système de l'invention,

la fig. 2 est une vue détaillée du transformateur haute fréquence de la fig. 1,

la fig. 3 est un schéma de principe de l'oscillateur de la fig. 1,

la fig. 4 est une vue du discriminateur de fréquence de la fig. 1,

la fig. 5 est une réalisation préférée du dispositif de l'invention.

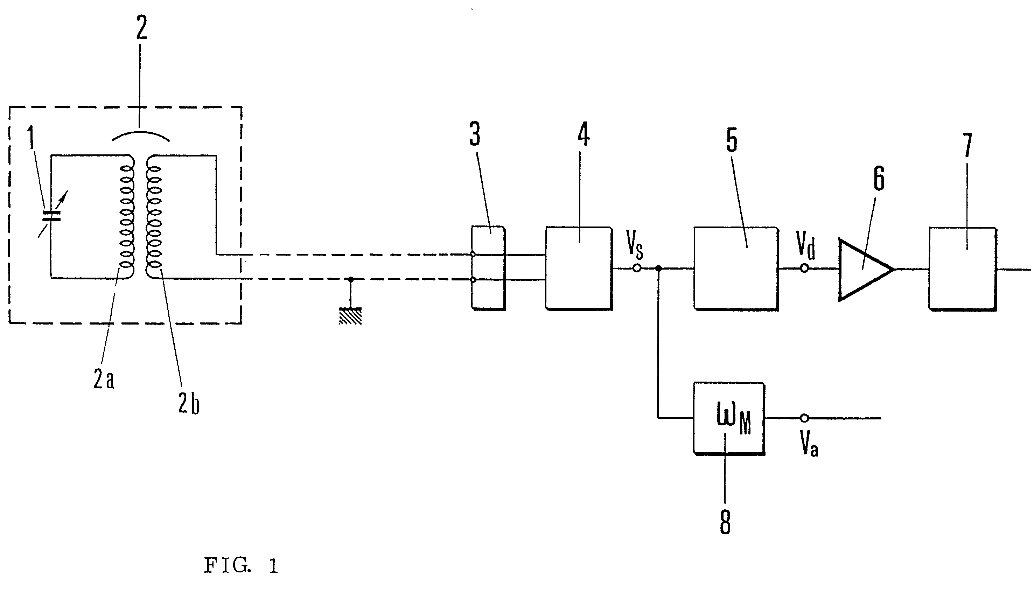

En se référant à la fig. 1, une représentation schématique du dispositif de mesure de la pression est donnée, distinguant la partie insérée dans la roue de l'aéronef et la partie disposée dans la cabine.

Un capteur de pression 1 passif disposé sur la valve de gonflage de la roue, en l'occurrence un capteur capacitif, fournit une information électrique, donc de capacité, présentant une valeur élevée et proportionnelle à la pression mesurée.

Un tel capteur de pression 1 peut par exemple être celui décrit dans le brevet LU-A No 80857. Ce capteur 1 de pression doit mesurer des pressions nominales de l'ordre de 5 à 25 bar, les pressions nominales étant de l'ordre de 8 à 10 bar pour les roues du train avant et de 10 à 15 bar pour les roues du train principal, selon les types d'avion.

Un tel capteur doit avantageusement être insensible aux effets de l'accélération et à ceux de la température. L'information de capacité, reliée linéairement à l'information de pression, est appliquée aux bornes du primaire 2a d'un transformateur haute fréquence 2.

Le primaire 2a de ce transformateur est mécaniquement solidaire de la roue de l'avion et tourne avec cette roue.

Un enroulement secondaire 2b, concentrique au premier enroulement 2a, reçoit l'information de capacité quasiment sans perte, les grandeurs des bobinages étant avantageusement choisies.

En effet, si n est le rapport du nombre de spires entre le primaire 2a et le secondaire 2b, la grandeur de la capacité $C_{2b}$, aux bornes du secondaire 2b, est modifiée selon le carré du rapport n de transformation des bobinages

$$C_{2b}=n^2C_1$$

où $C_1$ est la capacité mesurée aux bornes du capteur 1.

L'enroulement secondaire 2b est avantageusement mécaniquement fixe selon l'invention, et est porté par la partie fixe du train d'atterrissage.

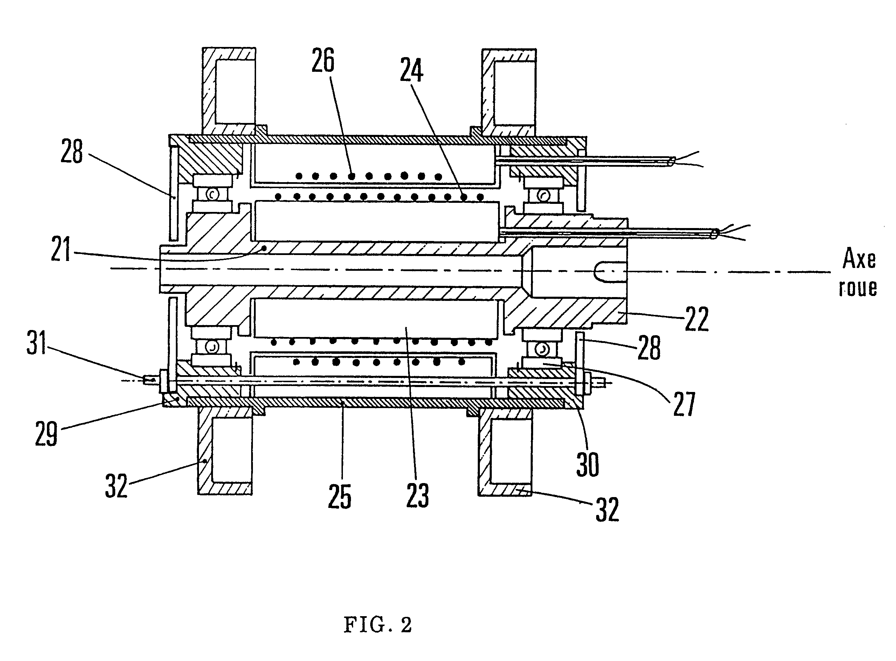

La fig. 2 illustre le transformateur 2 de l'invention.

Le rotor 21, usiné dans un matériau amagnétique, est solidaire de la roue. Ce rotor 21 se présente grossièrement sous la forme d'un cylindre de faible inertie, pourvu de protubérances 22 aux deux extrémités et gainé d'une carcasse 23 isolante entre ces deux protubérances 22. Cette carcasse isolante 23 reçoit le bobinage 24 constituant le primaire 2a du transformateur. Ce bobinage 24 est avantageusement imprégné avec un vernis résistant à la température de 200° C. Autour de ce primaire 2a, constitué par le rotor 21, la carcasse 23 et le bobinage 24, est disposé un secondaire 2b constitué essentiellement d'un corps tubulaire 25, en matériau amagnétique également, constituant la carcasse isolante extérieure. Le corps tubulaire 25 supporte intérieurement le bobinage 26 de la partie fixe du transformateur 2. Ce bobinage est également imprégné d'un vernis résistant à la température de 200° C. Les deux enroulements 24 et 26 se trouvent de la sorte en regard à faible distance, séparés par un faible espace d'air, l'un 24 mobile, mais toujours maintenu à l'intérieur de l'autre. En effet, la partie mobile 2a du transformateur 2, ou rotor, tourne sur des roulements 27 disposés entre les protubérances 22 du rotor et le corps 25 tubulaire du stator, de part et d'autre des enroulements 24 et 26. Deux flasques 28 en Téflon, lubrifiés par une graisse au silicone, ferment le logement des roulements 27 et leur assurent une protection supplémentaire à l'environnement. La graisse au silicone est avantageusement choisie pour sa résistance dans la gamme des températures comprises entre −55 et +200° C.

Ces flasques 28 s'appuient sur les bords du corps tubulaire 25 du secondaire 2b contre lequel ils sont maintenus grâce à deux bagues 29 et 30, également en matériau amagnétique. De plus, deux tirants 31, également en matériau amagnétique, traversant la partie fixe 2b de part en part, parallèlement à l'axe du transformateur 2, permettent de brider solidement les éléments constitutifs 25, 27, 28, 29, 30 de cette partie fixe 2b.

Deux voiles ou pièces circulaires 32, fixés sur la partie extérieure du corps tubulaire 25, assurent le centrage de la partie fixe 2b du transformateur 2 dans l'axe de la roue et dans l'axe de la partie 2a mobile de ce transformateur.

L'enroulement électrique 26 du secondaire 2b est relié au moyen d'un câble au cockpit. L'enroulement électrique 24 du primaire 2a, également fixe par rapport à la roue, puisqu'en rotation avec le capteur 1, évite tout contact électrique tournant.

Les capacités mesurées par le capteur sont de l'ordre de 100 à 700 pF habituellement, et le transformateur 2 haute fréquence tournant de l'invention peut être réalisé avec les bobinages 24 et 26 disposés dans l'air sans nécessiter de circuit magnétique supplémentaire de couplage, ainsi qu'on le verra ultérieurement. Une telle simplification facilite l'adaptation du système de l'invention à des formes de réalisation très différentes pour équiper des roues très différentes. Un tel système est également insensible aux variations thermiques, comme tout couplage magnétique, et n'exige pas un centrage trop rigoureux des enroulements primaire 24 et secondaire 26. Enfin, un tel système présente un faible coût de fabrication.

L'information de variation de capacité fournie par le capteur 1, puis transmise par le transformateur 2 haute fréquence, est acheminée au moyen d'un câble, par exemple une paire blindée vers le cockpit ou la cellule de l'avion.

Dans le cockpit, le câble est raccordé à l'entrée d'un oscillateur 4.

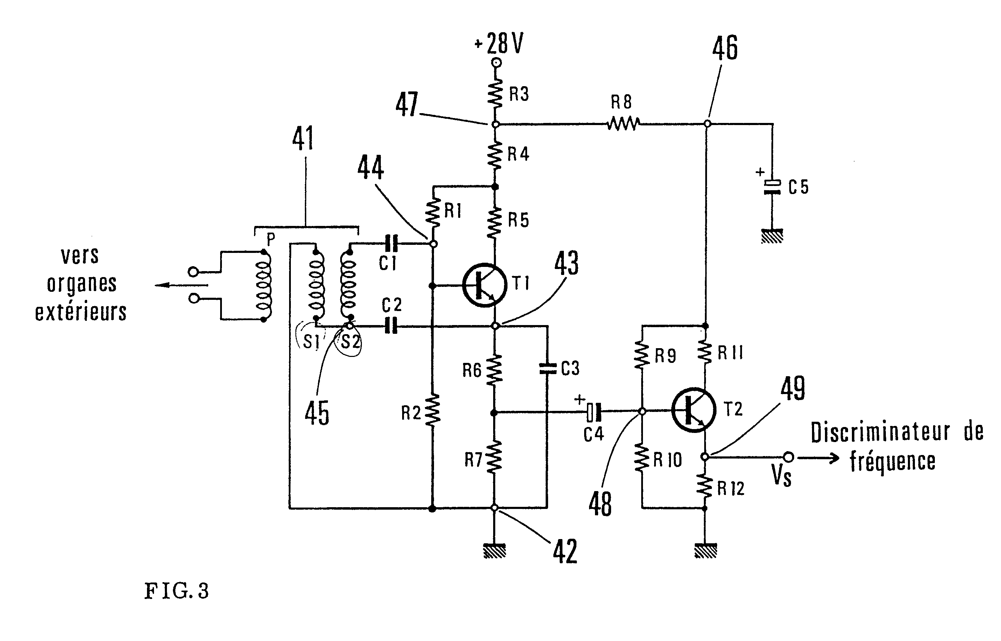

Cet oscillateur 4 est un auto-oscillateur dont la fréquence d'oscillation est fonction de l'information passive de capacité qui lui est transmise. La fig. 3 illustre les caractéristiques de cet oscillateur 4 de l'invention. Cet oscillateur 4 se compose essentiellement d'un transformateur 41 formé d'un enroulement primaire P et de deux enroulements secondaires $S_1$ et $S_2$ couplés entre eux. Un transistor $T_1$ monté en auto-oscillateur fournit une fréquence contrôlée par les enroulements secondaires $S_1$ et $S_2$. En effet, le collecteur du transistor $T_1$ est porté à la tension +28 V par l'intermédiaire de résistances placées en série $R_3$, $R_4$ et $R_5$, désignées dans l'ordre en partant du potentiel.

L'émetteur du transistor $T_1$ est porté à la masse en un point 42 par l'intermédiaire des résistances $R_6$ et $R_7$, également en série. Entre la base du transistor $T_1$ et le même point 42, porté à la masse, est placée une résistance $R_2$. Au point de raccordement des résistances $R_4$ et $R_5$ est insérée une résistance $R_1$ dont l'autre borne est reliée à la base du transistor $T_1$.

Deux condensateurs $C_1$ et $C_2$ sont insérés aux bornes du secondaire $S_2$ du transformateur 41. Le condensateur $C_1$ est relié, d'une part, à un point 44 placé entre la résistance $R_1$ et la base du transistor $T_1$, et, d'autre part, à une extrémité de l'enroulement $S_2$.

L'autre extrémité de l'enroulement $S_2$ est reliée à une borne 45 du condensateur $C_2$. L'autre borne du condensateur $C_2$ est raccordée en un point 43 situé entre l'émetteur du transistor $T_1$ et la

résistance $R_6$. L'autre enroulement secondaire $S_1$ est raccordé, d'une part, au condensateur $C_2$ au même point 45 de connexion que l'enroulement $S_2$, et, d'autre part, au point 42 porté à la masse.

Un autre condensateur $C_3$ est placé en parallèle avec les résistances $R_6$ et $R_7$ entre les points 42 et 43.

Un second transistor $T_2$ est monté en adaptateur d'impédance. La base de ce transistor $T_2$ est raccordée par l'intermédiaire d'un condensateur $C_4$ à un point situé entre les résistances $R_6$ et $R_7$.

Entre un point 46 et le collecteur du transistor $T_2$ est placée une résistance $R_{11}$.

Ce point 46 est relié, d'une part, à la masse par l'intermédiaire d'un condensateur $C_5$, et, d'autre part, au point 47 placé entre les résistances $R_3$ et $R_4$, par l'intermédiaire d'une résistance $R_8$.

Une résistance $R_{12}$ est insérée entre la masse et l'émetteur du transistor $T_2$. Une résistance $R_9$ est insérée d'un côté entre le point 46 et la résistance $R_{11}$, et de l'autre côté au point 48 situé entre le condensateur $C_4$ et la base du transistor $T_2$.

En ce même dernier point 48 est placée une résistance $R_{10}$ dont l'autre branche est raccordée en un point situé entre la masse et la résistance $R_{12}$. Le signal $V_s$ de sortie est fourni en un point 49 placé à la sortie de l'émetteur du transistor $T_2$.

Le transistor $T_2$ monté en adaptateur d'impédance transmet un signal $V_s$ porteur de l'information de fréquence.

Le signal $V_s$ est lié à l'information de fréquence par une relation du genre:

$$V_s(t) = E_s \sin\omega_s t$$

où la pulsation $\omega_s$ est reliée à la fréquence $f_s$ par la relation $\omega_s = 2\pi f_s$.

L'oscillateur 4, porteur de l'information de pression sous la forme d'une variation de fréquence, peut être assimilé à un modulateur de fréquence, comme on le verra ultérieurement.

Le fonctionnement de l'oscillateur 4 se déduit de celui des transistors $T_1$ et $T_2$. Les résistances alimentent les deux transistors $T_1$ et $T_2$ en courant continu. Ces deux transistors fonctionnent en classe A, leur base étant portée à un potentiel positif par rapport à leur émetteur respectif, par l'intermédiaire des ponts résistifs constitués par les résistances $R_1$ et $R_2$ pour $T_1$, et $R_9$ et $R_{10}$ pour $T_2$.

Le condensateur $C_3$ découple l'émetteur de $T_1$ aux fréquences élevées supérieures à la gamme des fréquences de fonctionnement. Pour ces dernières, l'impédance présentée par $C_3$ est donc élevée.

Les condensateurs $C_1$ et $C_2$ isolent respectivement en courant continu la base et l'émetteur du transistor $T_1$ de l'enroulement $S_2$ accordé de l'oscillateur sinusoïdal à résonance parallèle. L'impédance de ces condensateurs $C_1$ et $C_2$ est donc faible pour les fréquences de fonctionnement.

Le circuit résonnant de l'oscillateur 4 est constitué par les bobinages secondaires $S_1$ et $S_2$ disposés en série, et le condensateur fictif correspondant au condensateur 1 est ramené par le bobinage primaire P du transformateur 41. La capacité de ce condensateur fictif est fonction notamment de la valeur de celle du capteur capacitif 1, du rapport de transformation du transformateur 2 et du transformateur 41, ainsi que de la capacité parasite du câble de liaison entre la partie fixe de la roue de l'avion et l'entrée P du transformateur 41.

Au point de vue de la haute fréquence, le circuit résonnant parallèle est donc disposé entre la base du transistor $T_1$ (point 44) et sa masse, le point de couplage 45 étant réuni à l'émetteur. L'enroulement $S_2$ assure la réaction entre l'émetteur et la base du transistor $T_1$ et provoque son auto-oscillation.

La fréquence de cette oscillation dépend de la valeur des divers composants constitutifs et la variation de fréquence, porteuse de l'information de pression, ne dépend que de la variation de capacité du capteur de pression 1 dans la mesure où les autres éléments sont stables. Or la plage extrême de fréquences significatives est suffisamment réduite pour que la variation de la fréquence du signal $V_s$ obtenu à la sortie de l'oscillateur 4 en fonction de la capacité du capteur 1 puisse être considérée comme linéaire, à $\pm 1\%$ près environ. Comme on est convenu de choisir un capteur 1 dont la variation de capacité en fonction de la pression est également linéaire dans le domaine de pressions utiles, le signal $V_s$ est porteur d'une information de fréquence $2\pi\omega_s$ qui est une fonction linéaire de la variation de pression du pneumatique considéré.

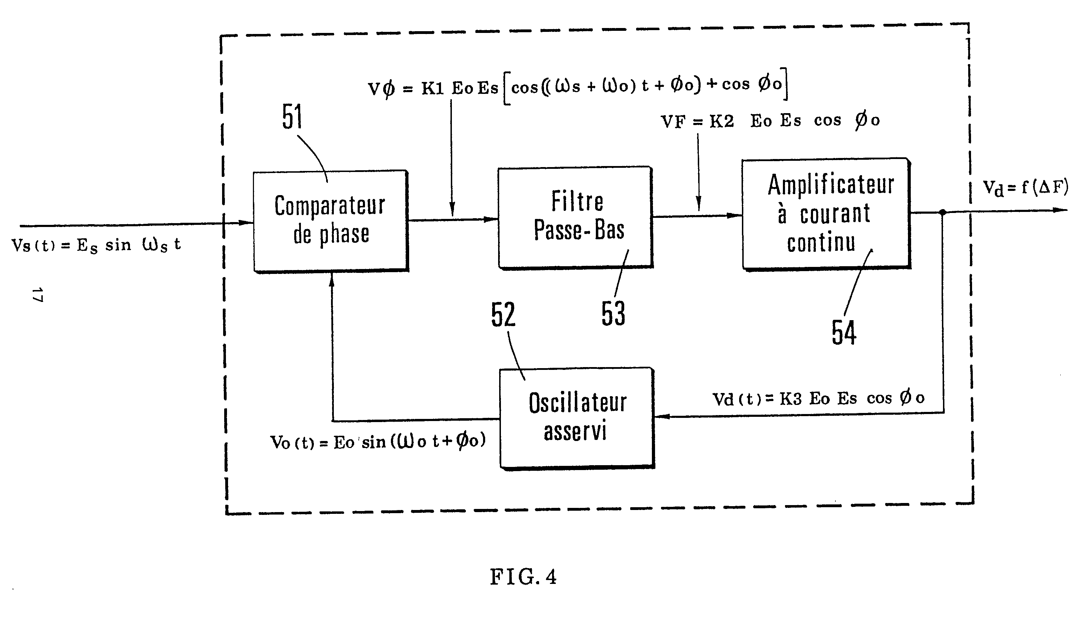

Le signal $V_s$ issu de l'oscillateur 4 asservi à l'information de capacité est appliqué à l'entrée d'un discriminateur de fréquence 5. Une représentation détaillée du discriminateur de fréquence est donnée sur la fig. 4. Des discriminateurs de ce type sont déjà connus. Un comparateur 51 de phase reçoit le signal $V_s$ fourni par le dispositif 4 et compare ce signal à celui fourni par un oscillateur asservi 52. Cet oscillateur 52 est contrôlé en tension et fournit un signal de fréquence $\omega_o$, au coefficient $2\pi$ près ($\omega_o = 2\pi f_o$), s'écrivant:

$$V_o(t) = E_o \sin(\omega_o t + \phi_o)$$

dans laquelle $\phi_o$ est une phase de verrouillage, c'est-à-dire la phase initiale du signal $V_s(t)$ lorsque les signaux $V_o(t)$ et $V_s(t)$ présentent une même fréquence. Le comparateur 51 de phase produit à sa sortie une tension $V\phi$ proportionnelle à la différence de phase des signaux $V_s(t)$ et $V_o(t)$. Le signal $V\phi$ s'écrit

$$K_1 E_o E_s [\cos(\omega_s + \omega_o)t + \phi_o) + \cos\phi_o]$$

dans lequel $K_1$ est une constante.

Un filtre 53 passe-bas permet d'éliminer les signaux haute fréquence parasites présents dans le signal $V\phi$. On obtient ainsi un signal s'écrivant:

$$V_f = K_2 E_o E_s \cos\phi_o$$

dans lequel $K_2$ est une constante.

Le signal $V_f$ issu du filtre 53 est appliqué à l'entrée d'un amplificateur 54 de courant continu qui fournit en sortie un signal $V_d(t)$ s'écrivant

$$V_d(t) = K_3 E_o E_s \cos\phi_o$$

où $K_3$ est une constante.

Cet amplificateur 54 amplifie la tension d'erreur. Le signal $V_d(t)$ de sortie est appliqué à l'entrée de l'oscillateur 52 asservi qui est ainsi inséré dans la boucle de retour afin de fournir la tension de contrôle de la fréquence de cet oscillateur 52. Cette boucle agit ainsi comme un contrôleur proportionnel de phase et, dans le cas où il y a verrouillage, l'erreur de phase $\phi_i - \varnothing\phi_o$ est fonction du gain de la boucle ouverte. Comme la phase est l'intégrale de la fréquence, la boucle peut aussi être considérée comme un contrôleur intégral de fréquence, n'entraînant pas de variation ou d'écart de fréquence lorsqu'il y a verrouillage, c'est-à-dire lorsque les deux oscillateurs sont asservis en fréquence.

Il est ainsi possible de transmettre une tension de contrôle à l'oscillateur 52 à travers le filtre 53 à bande passante très réduite, de l'ordre de quelques hertz.

Le dispositif 4 oscillateur - modulateur de fréquence, porteur de l'information de pression sous la forme d'une variation de fréquence, joue selon l'invention le rôle d'oscillateur de référence par rapport à l'oscillateur asservi 52.

L'écart de fréquence obtenu à la sortie de l'amplificateur 54 est fourni sous la forme d'une tension $V_d$ représentant la composante continue fonction de la différence de phases entre les deux signaux comparés.

Cette détection présente divers avantages:

Le filtre 53 passe-bas peut avoir une fréquence de coupure très basse, réduisant par là même la bande de bruit de détection et contribuant à éliminer les signaux parasites et les alarmes intempestives.

En outre, on choisit selon l'invention une plage de fonctionnement de l'oscillateur 52 contrôlé en tension dans une région où sa caractéristique de tension en fonction de la fréquence est quasiment linéaire.

Supposons que le capteur 1 détecte une pression qui se traduit par une fréquence

$$\frac{\omega_M}{2\pi}$$

au niveau de l'oscillateur 4 dit de référence; le signal $\theta_i$ appliqué à l'entrée du détecteur de phase 5 s'écrit:

$$\theta_i = (\omega_c + \delta\omega\cos\omega_M t)dt$$

où $\omega_c/2\pi$ est la fréquence de repos.

Supposons que le gain de boucle soit suffisamment élevé pour que $\theta_i$ soit voisin de $\theta_o$, signal délivré par l'oscillateur 52 asservi lorsqu'il présente la même fréquence que l'oscillateur 4 de référence.

La fréquence délivrée par l'oscillateur 52 est donnée par:

$\omega_o = \omega_c + \delta\omega\cos\omega_M t$ au coefficient $2\pi$ près.

Puisque l'oscillateur 52 présente, dans la plage de fonctionnement de l'invention, une fonction de transfert linéaire:

$$\omega_o = K_o V_d$$

et

$$V_d = \frac{\omega_c}{K_o} + \frac{\Delta\omega}{K_o}\cos\omega_M t$$

La tension $V_d$ de sortie du dispositif 5 comparateur de phase est donc représentée par le signal de modulation $\cos\omega_M t$ auquel est ajoutée une composante continue

$$\frac{\omega_c}{K_o}.$$

Comme le signal $V_d$ utile est prélevé après traitement par le filtre à bande étroite 53, les signaux parasites détectés sont éliminés. Un amplificateur 6 reçoit le signal $V_d$ utile et fournit un signal à l'entrée d'un calculateur 7.

Le système de détection ainsi décrit est associé à chaque roue d'avion. Toutefois, le calculateur 7 est commun à toutes les roues de l'avion.

Supposons qu'il s'agisse d'un avion du type Airbus. Alors, les 10 roues de l'avion sont chacune pourvues d'un capteur $1_i$ et d'un transformateur $2_i$ fournissant un signal $V_{di}$ représentatif de l'information de la roue correspondante et relié linéairement à la pression $P_i$ de son pneumatique, ce qui s'écrit sous la forme:

$$V_{di}=kp_i$$

dans laquelle k est une constante.

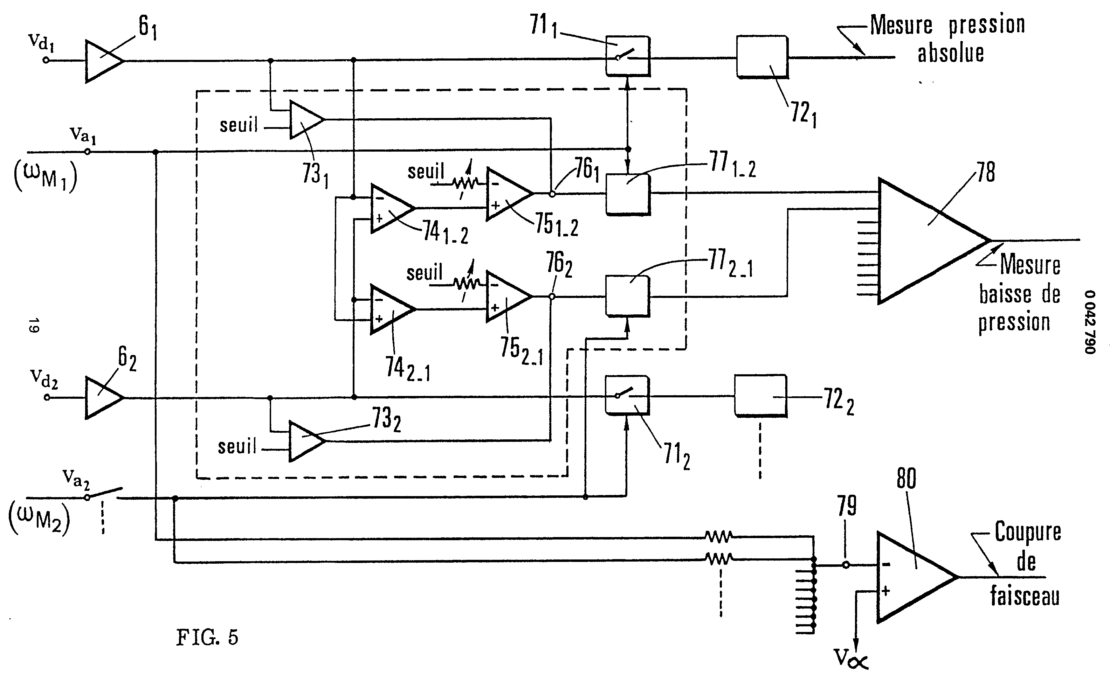

En se référant à la fig. 5, une représentation d'un mode d'exploitation de l'information de tension $V_{di}$ par le calculateur 7 est donnée par un système à 10 roues (i=1 à 10).

Les 10 amplificateurs $(6_i)$ (i=1 à 10) transmettant l'information $(V_{di})$ (i=1 à 10) de tension représentative de la pression du pneu correspondant sont raccordés à 10 dispositifs $(72_i)$ (i=1 à 10) de visualisation de la mesure absolue de pression de chaque pneumatique par l'intermédiaire de 10 interrupteurs $(71_i)$ (i=1 à 10).

Un dispositif de mesure de la pression différentielle permet au calculateur 7 d'effectuer la mesure de la pression des roues deux par deux. Ainsi, la mesure de la tension $V_{d1}$ (respectivement $V_{d2}$) après amplification au moyen de l'amplificateur $6_1$ est appliquée à l'entrée négative de l'amplificateur $74_{1-2}$ (respectivement $74_{2-1}$) monté en comparateur de pression différentielle. L'entrée directe (+) du comparateur $74_{1-2}$ (respectivement $74_{2-1}$) reçoit le signal $V_{d2}$ (respectivement $V_{d1}$); chaque comparateur $74_{1-2}$ et $74_{2-1}$ compare le signal $V_{d1}$ au signal $V_{d2}$ et délivre un signal positif lorsque la pression du pneu d'une roue est supérieure à celle de l'autre. Par exemple, le comparateur $74_{1-2}$ délivre un signal positif lorsque la pression différentielle entre le pneu de la roue 2 et celui de la roue 1 est positive.

Cette éventualité est inhérente soit à un accroissement de pression dans la roue 2, soit plus probablement à une chute de la pression de la roue 1.

Comme la tension $V_{di}$ est une fonction linéaire de la pression, la tension différentielle est également linéairement liée à la sous-pression d'une roue par rapport à l'autre. De la même façon, les autres roues sont associées deux à deux, la pression différentielle de la roue 3 est comparée à celle de la roue 4 et ainsi de suite, les comparateurs $74_{i-j}$ et $74_{j-i}$ pour les roues i et j ($1 \leqslant i, j \leqslant 10$ pour l'Airbus).

En outre, un dispositif de détection de la baisse de pression absolue est également inséré dans le calculateur 7 de l'avion. Un amplificateur $73_1$ monté en comparateur de tension détecte la sous-pression de la roue 1. Pour ce faire, son entrée directe (+) est portée à un potentiel positif de référerence prédéterminé. Son entrée inverse (−) reçoit le signal $V_{dl}$ amplifié par l'amplificateur $6_1$. Ce comparateur de tension $73_1$ délivre un zéro logique, tant que la tension image de $V_{d1}$ amplifiée reste supérieure au niveau de référence ou, en d'autres termes, tant que la pression de la roue 1 demeure supérieure au seuil de consigne prédéterminé. A contrario, le comparateur $73_1$ délivre un signal d'alarme «baisse de pression absolue» sous la forme d'un signal 1 logique lorsque la tension de mesure tombe en deçà du niveau de référence. Le seuil de référence des comparateurs $(73)_i$ est ajustable par exemple entre 6,3 bar et 9,8 bar par l'intermédiaire d'un potentiomètre réglant la tension de l'entrée positive de cet amplificateur $(73_i)_1 \leqslant i \leqslant 10$.

De la même façon, à chaque roue correspond un dispositif $(73_i)_1 \leqslant i \leqslant _{10}$ de détection de la baisse de pression absolue.

En outre, comme le comparateur $74_{1-2}$ (respectivement $74_{2-1}$) fournit un signal analogique positif fonction de la différence de pression entre la roue 1 et la roue 2 (respectivement entre la roue 2 et la roue 1), on utilise, selon l'invention, cette information de décroissance de la pression d'une roue par rapport à l'autre. En effet, les sorties des comparateurs $74_{1-2}$ et $74_{2-1}$ sont respectivement raccordées sur les entrées directes (+) de deux comparateurs de tension $75_{1-2}$ et $75_{2-1}$. Les entrées inverses (−) de ces deux comparateurs sont portées à un potentiel positif correspondant à celui délivré par les comparateurs $74_{1-2}$ et $74_{2-1}$. Ces niveaux de détection des pressions différentielles sont ajustés par l'intermédiaire de potentiomètres fixant les niveaux de seuil des entrées inverses (−) des comparateurs $75_{1-2}$ et $75_{2-1}$. Ces comparateurs $75_{1-2}$ et $75_{2-1}$ détectent ainsi respectivement les sous-pressions différentielles des roues 1 et 2 et fournissent en sortie un signal logique 1 lorsque la pression différentielle affectant la roue surveillée 1 (et 2 respectivement) atteint ou est inférieure à la valeur de consigne représentative d'un dégonflage.

Les deux signaux logiques de baisses de pression issus des comparateurs $73_1$ et $75_{1-2}$ détectant respectivement la sous-pression absolue et la sous-pression différentielle affectant la roue No 1 sont sommés dans un circuit OU $76_1$ et transmis à un circuit sommateur général 78 par l'intermédiaire d'un interrupteur $77_{1-2}$.

De la même façon pour la roue No 2, un circuit OU $76_2$ somme le signal de sous-pression absolue issu du comparateur $73_2$ avec le signal de sous-pression différentielle issu du comparateur $75_{2-1}$ et le fournit à l'entrée du circuit sommateur 78.

Chaque roue fournit à l'entrée du circuit 78 un signal représentatif de la baisse de pression qui peut actionner un dispositif de signalisation de panne.

Toutefois, afin d'éviter des alarmes intempestives, un dispositif 8, détecteur de la fréquence $\omega_M/2\pi$ d'oscillation de l'auto-oscillateur 4, est inséré dans le cockpit pour chaque roue.

En se référant à la fig. 1, le détecteur 8 reçoit à son entrée le signal $V_s$, issu de l'oscillateur 4, et fournit en sortie un signal $V_{a1}$ représentatif de la pulsation $\omega_{M1}$. Un circuit sommateur 79 reçoit tous les signaux $V_{ai}$ des différentes roues et le signal résultant est appliqué à l'entrée inverse (−) d'un amplificateur 80.

L'entrée directe (+) de l'amplificateur 80 reçoit une tension $V_\alpha$ fixe, convenablement choisie.

Lorsque les informations de pression des pneumatiques $V_{ai}$ issues des 10 roues de l'avion sont correctement transmises et détectées, les détecteurs $(8_i)_{1 \leqslant i \leqslant 10}$ de fréquence fournissent une tension $V_{ai}$ maximale chacun, et la tension obtenue à la sortie du circuit de sommation 79 est maximale. Le signal logique obtenu à la sortie de l'amplificateur 80, monté en basculeur, est donc un 0 en fonctionnement normal. Le potentiel fixe $V_\alpha$ représente environ 0,85 fois la tension maximale obtenue à la sortie du circuit 79 de sommation. Ainsi, si une défaillance par coupure ou court-circuit affecte les organes extérieurs associés à une seule roue, le signal de sortie de l'amplificateur 80 ne sera pas modifié, car le potentiel sur l'entrée inverse (−) est supérieur à celui de $V_\alpha$ sur l'entrée directe (+).

Par contre, si deux liaisons ou plus sont coupées, la tension $V_\alpha$ devient supérieure à celle obtenue à la sortie du circuit 79 et l'amplificateur 80 fournit en sortie un 1 logique représentatif d'un signal d'alarme «coupure de faisceau». Cette alarme apparaît donc lorsque au moins deux défaillances affectant deux roues différentes apparaissent, et ce quels que soient les types de défaillance.

La surveillance des organes extérieurs est en outre complétée par la reconnaissance de la fréquence $\omega_{Mi}/2\pi$ de l'oscillateur $4_i$ concerné.

En effet, les détecteurs $8_i$ de fréquence d'oscillation reconnaissent si la fréquence $\omega_{Mi}/2\pi$ détectée est bien comprise dans la bande de fréquences de mesures permises. Cela permet d'éviter des alarmes intempestives. A cet effet, les détecteurs $8_i$ sont chacun formés d'un interrupteur, ou «switch», sensible à la fréquence, fournissant un signal nul pour toute fréquence inférieure ou supérieure à une gamme $(F_1, F_2)$ de fréquences, $F_1$ et $F_2$ étant les deux fréquences limites de commutation.

Un tel circuit de commutation est bien connu de l'homme de l'art et est obtenu par l'adjonction de deux résistances et de deux condensateurs.

Un tel détecteur $8_i$ présente une exceptionnelle immunité à un déclenchement sur un signal aléatoire ou un signal de bruit.

Chaque détecteur $8_i$ commande des interrupteurs d'alarme $71_i$ et $77_{i-j}$ par lesquels transitent respectivement les signaux de mesure de pression absolue et de baisse de pression de cette roue. Si la fréquence $\omega_M/2\pi$ est comprise dans la gamme prévue, c'est-à-dire si les organes extérieurs ne sont ni en court-circuit ni coupés, et si cette fréquence $\omega_M/2\pi$ est suffisamment stable pendant la durée d'échantillonnage, les interrupteurs $71_i$ et $77_{i-j}$ recevront leur commande d'état normalement fermé, c'est-à-dire, un 1 logique.

Dans le cas contraire, les interrupteurs $71_i$ et $77_{i-j}$ recevront un 0 logique du détecteur $8_i$ qui les maintiendra ouverts, ce qui correspond à une alarme bloquant la transmission des signaux de mesure de pression et de baisse de pression de la roue N° i.

Cependant, une telle éventualité sur la roue N° i ne modifie pas la mesure des autres roues.

D'autres dispositifs de test automatique et de signalisation peuvent s'insérer dans le cockpit à partir des signaux décrits dans la présente demande afin d'assurer une parfaite sécurité de fonctionnement.

En particulier, on associe les roues paire et impaire symétriquement situées sur le même axe pour la mesure de pression différentielle aussi bien que pour la mesure de baisse de pression.

En outre, un multiplexage des 10 signaux de mesure permet une lecture rapide de l'ensemble des pressions des roues de l'avion.

**Revendications**

1. Dispositif pour mesurer la pression des pneumatiques, notamment pour aéronefs, comprenant un capteur passif (1) agencé pour transformer linéairement une variation de pression en une variation d'information électrique, *in situ*, des premiers moyens (2) agencés pour acheminer l'information électrique du capteur dans la cabine dudit aéronef, un auto-oscillateur (4) dont la fréquence d'oscillation est contrôlée par la valeur de ladite information électrique du capteur et des seconds moyens (5) agencés pour transformer le signal issu dudit auto-oscillateur en une tension continue proportionnelle à un écart de fréquence, ledit écart de fréquence étant proportionnel à ladite variation de pression, l'information électrique du capteur, avant transmission dans la cabine, étant appliquée aux bornes du primaire (2a) d'un transformateur haute fréquence (2) faisant partie desdits premiers moyens, ledit primaire (2a) étant mécaniquement solidaire de la roue, le secondaire dudit transformateur étant mécaniquement solidaire d'une partie fixe de l'aéronef, et le rapport n de transformation entre le primaire et le secondaire modifiant l'information électrique du capteur selon le carré dudit rapport n, dispositif caractérisé par le fait que le primaire (2a) du transformateur (2) est concentrique à la roue, et le secondaire (2b) du transformateur (2) est solidaire de la partie fixe du train d'atterrissage et concentrique au primaire (2a).

2. Dispositif selon la revendication 1, caractérisé par le fait que le signal issu dudit auto-oscillateur (4) sert d'oscillateur de référence pour un second oscillateur (52) asservi en phase et en fréquence, ledit second oscillateur (52) étant commandé en tension par le signal issu d'un comparateur de phase (51), ledit comparateur de phase (51) étant excité par les signaux issus desdits premier (4) et second (52) oscillateurs.

3. Transformateur haute fréquence (2) utilisé dans le dispositif selon l'une des revendications 1 et 2, caractérisé par le fait qu'il comporte deux enroulements (24, 26) concentriques, l'un étant fixe, l'autre en rotation autour de l'axe du premier, lesdits enroulements (24, 26) étant maintenus au moyen de carcasses (23, 25) quasi cylindriques en matériau amagnétique, la carcasse mobile (23) étant maintenue en contact contre la carcasse fixe (25) par des moyens de roulement (27), lesdites carcasses (23, 25) présentant une très faible inertie, et des fils électriques raccordés aux bornes desdits enroulements (24, 26), lesdits fils transmettant un signal présentant un rapport $n^2$ de transformation représentatif du rapport n desdits enroulements (24, 26).

## Patentansprüche

1. Vorrichtung zur Messung des Druckes von Luftbereifungen, insbesondere von Luftfahrzeugen, mit einem passiven Wandler (1) zur linearen Umwandlung einer Druckänderung in eine Änderung einer elektrischen Information, *in situ*, mit einer ersten Einrichtung (2) zur Weiterleitung der elektrischen Information des Wandlers in die Kabine des Luftfahrzeuges, einem selbstschwingenden Oszillator (4), dessen Schwingfrequenz durch den Wert der elektrischen Information des Wandlers bestimmt wird, und mit einer zweiten Einrichtung (5) zur Transformation des Ausgangssignales des selbstschwingenden Oszillators in eine einer Frequenzabweichung proportionalen Gleichspannung, wobei die Frequenzabweichung der Druckänderung proportional ist, und wobei die elektrische Information des Wandlers vor ihrer Übertragung in die Kabine an die Anschlussklemmen der Primärseite (2a) eines Hochfrequenztransformators (2) angelegt wird, welcher Hochfrequenztransformator Teil der ersten Einrichtung ist, und wobei die Primärseite (2a) mit dem Rad mechanisch fest verbunden ist, und die Sekundärseite des Transformators mit einem festen Teil des Luftfahrzeuges mechanisch fest verbunden ist, und wobei das Übersetzungsverhältnis n zwischen Primär- und Sekundärseite die elektrische Information des Wandlers gemäss dem Quadrat des Übersetzungsverhältnisses n beeinflusst, dadurch gekennzeichnet, dass die Primärseite (2a) des Transformators (2) zum Rad konzentrisch ist und dass die Sekundärseite (2b) des Transformators (2) mit dem festen Teil des Fahrgestelles fest verbunden und zur Primärseite (2a) konzentrisch ist.

2. Vorrichtung nach Anspruch 1, dadurch gekennzeichnet, dass das Ausgangssignal des selbstschwingenden Oszillators (4) als Bezugssignal für einen zweiten, in seiner Phase und Frequenz geregelten Oszillator (52) dient, wobei der zweite Oszillator (52) durch das Ausgangssignal einer Phasenvergleichsschaltung (51) spannungsgesteuert ist, und die Phasenvergleichsschaltung (51) von den Ausgangssignalen des ersten (4) und zweiten (52) Oszillators angesteuert ist.

3. Hochfrequenztransformator (2) zur Verwendung in der Vorrichtung nach einem der Ansprüche 1 oder 2, dadurch gekennzeichnet, dass er zwei konzentrische Wicklungen (24, 26) aufweist, von welchen eine fest angeordnet und die andere um die Achse der ersteren rotierbar angeordnet ist, diese Wicklungen (24, 26) durch quasi zylindrische Gehäuse (23, 25) aus antimagnetischem Material gehalten sind, dass das mobile Gehäuse (23) gegen das feste Gehäuse (25) durch eine Lagereinrichtung (27) in Anlage gehalten ist, die Gehäuse (23 und 25) eine sehr geringe Trägheit besitzen, Drähte mit den Anschlussklemmen der Wicklungen (24, 26) verbunden sind, und dass über diese Drähte ein Signal übertragen wird, das ein Übersetzungsverhältnis $n^2$ aufweist, das dem Übersetzungsverhältnis n der Wicklungen (24, 26) representativ ist.

## Claims

1. Device for measuring the pressure of tyres, particularly for aircraft, comprising a passive sensor adapted to linearly convert a pressure variation into an electrical information variation, *in situ*, first means (2) adapted to convey the electrical information from the sensor to the cockpit of said aircraft, a self-oscillator (4) whose oscillation frequency is controlled by the value of said electrical information from the sensor and second means (5) adapted to convert the signal issuing from said self-oscillator into a d.c. voltage proportional to a frequency variation, said frequency variation being proportional to said pressure variation, the electrical information from the sensor, before transmission to the cockpit, being applied to the terminals of the primary winding (2a) of a high-frequency transformer (2) being part of said first means, said primary winding (2a) being mechanically fast with the wheel, the secondary winding of said transformer being mechanically fast with a stationary part of the aircraft, and the ratio n of transformation between the primary winding and the secondary winding modifying the electrical information from the sensor according to the square of said ratio n, device characterized in that the primary winding (2a) of the transformer (2) is concentric with respect to the wheel and the secondary winding (2b) of the transformer 2 is mechanically fast with the stationary part of the landing gear and concentric with respect to the primary winding (2a).

2. Device of Claim 1, characterized in that the signal issuing from said self-oscillator (4) serves as reference signal, for a second oscillator (52) servo-controlled in phase and in frequency, the voltage of said second oscillator (52) being controlled by the signal issuing from a phase comparator (51), said phase comparator (51) being excited by the signals issuing from said first (4) and second (52) oscillators.

3. High-frequency transformer (2) used in the device of Claim 1 or 2, characterized in that it comprises two concentric windings (24, 26), one being stationary, the other rotating about the axis of the first, said windings (24, 26) being maintained by means of quasi cylindrical shells (23, 25) made of non-magnetic material, the mobile shell (23) being maintained in contact against the stationary shell (25) by bearing means (27), said shells (23, 25) having a very low inertia, electrical wires connected to the terminals of said windings (24, 26), said wires transmitting a signal having a ratio (42) of transformation representative of the ratio n of said windings (24, 26).

FIG. 1

FIG. 2

FIG.3

vers
organes
extérieurs

Discriminateur de
fréquence

+28V

$$V\phi = K1 \; Eo \; Es \left[\cos\left((\omega s + \omega o)\, t + \phi o\right) + \cos \phi o\right]$$

$$VF = K2 \; Eo \; Es \; \cos \phi o$$

**51**

Comparateur de phase

**52**   **53**

Filtre Passe-Bas

Amplificateur à courant continu

**54**

$Vs(t) = E_s \sin \omega_s t$

$Vo(t) = Eo \sin (\omega o\, t + \phi o)$

Oscillateur asservi

$Vd(t) = K3 \; Eo \; Es \; \cos \phi o$

$Vd = f(\Delta F)$

FIG. 4

0 042 790

FIG. 5

seuil ... $v_{d_1}$ $6_1$ $71_1$ Mesure pression absolue $72_1$ $v_{a_1}$ $(\omega_{M_1})$ $73_1$ seuil $74_{1-2}$ $75_{1-2}$ $76_1$ $77_{1-2}$ $78$ Mesure baisse de pression seuil $74_{2-1}$ $75_{2-1}$ $76_2$ $77_{2-1}$ $v_{d_2}$ $6_2$ seuil $73_2$ $71_2$ $72_2$ $v_{a_2}$ $(\omega_{M_2})$ $79$ $80$ Coupure de faisceau $v_\alpha$

0 042 790